# EUROPÄISCHE PATENTSCHRIFT

(11) **EP 1 555 149 B1**
(45) Veröffentlichungstag und Bekanntmachung des Hinweises auf die Patenterteilung: **29.10.2008**
(21) Anmeldenummer: 04290102.5
(22) Anmeldetag: 14.01.2004
(51) Int. Cl.: B60H 1/00, F16H 7/00, F16C 1/10

(54) **Übertragungsvorrichtung für eine Kraftfahrzeug-Klimaanlage**
Transmission device for a vehicle air-conditioning unit
Transmission de mouvement pour une climatisation d'un véhicule automobil

(43) Veröffentlichungstag der Anmeldung: 20.07.2005
(73) Patentinhaber: Behr France Rouffach SAS, 68250 Rouffach (FR)
(72) Erfinder: Kippelen, Stephane, 68170 Rixheim (FR)
(74) Vertreter: Grauel, Andreas

(56) Entgegenhaltungen:
- DE-A- 2 616 331
- DE-A- 2 803 807
- DE-A- 10 013 396
- FR-A- 2 171 617
- PATENT ABSTRACTS OF JAPAN Bd. 0011, Nr. 01 (M-035), 8. September 1977 (1977-09-08) & JP 52 041788 A (NORITSU CO LTD), 31. März 1977 (1977-03-31)

## Beschreibung

Die Erfindung betrifft eine Übertragungsvorrichtung, insbesondere für ein Stellorgan einer Kraftfahrzeug-Klimaanlage, gemäß dem Oberbegriff des Anspruchs 1, sowie eine Klimaanlage mit einer solchen Übertragungsvorrichtung.

Zur Betätigung von Stellorganen, wobei die Betätigungsvorrichtung entfernt von demselben angeordnet ist, ist zur Übertragung eine sogenannte Flexwelle bekannt, welche eine Drehung der Betätigungsvörrichtung an das Stellorgan überträgt, indem eine elastische Welle oder Seele, die insbesondere in einem ebenfalls elastischen Schlauch angeordnet ist, die Drehbewegung überträgt. Hierbei treten Probleme auf Grund von Reibung und eines Spiels infolge einer elastischen Verformung der Welle über ihre Länge. Ferner ermöglicht eine derartige Übertragungsvorrichtung in vielen Fällen unerwünschte Drehungen von 360° und mehr.

Ferner sind Bowdenzüge mit in einem Schlauch angeordneten Seelen bekannt, die jedoch zur Übertragung linearer Bewegungen verwendet werden.

FR 2 171 617 offenbart eine Übertragungsvorrichtung gemäß dem Oberbegriff des Anspruchs 1.

Es ist Aufgabe der Erfindung, eine Übertragungsvorrichtung der eingangs genannten Art zu verbessern.

Diese Aufgabe wird gelöst durch eine Übertragungsvorrichtung mit den Merkmalen des Anspruchs 1.

Erfindungsgemäß ist eine Übertragungsvorrichtung zur Übertragung einer Drehbewegung von einer Betätigungsvorrichtung zu einem Stellorgan, insbesondere einer Kraftfahrzeug-Klimaanlage, mit einem in einem Mantel angeordneten Kabel vorgesehen, wobei das Kabel als endloses Kabel ausgebildet ist und um eine betätigungsseitig angeordnete Scheibe und um eine stellorganseitige Scheibe geführt ist. Dies erlaubt auch eine Drehung des Stellorgans um 360°. Eine derartige Übertragungsvorrichtung ermöglicht eine Übertragung einer Drehbewegung von einer Betätigungsvorrichtung zu einem Stellorgan, wobei die Drehachsen in nahezu beliebiger Ausrichtung zueinander sein können. Bevorzugt ist das Kabel zur Erhöhung der Reibung zwischen Kabel und Scheibe mindestens eineinhalbmal um jede Scheibe gewickelt.

Die Scheiben sind erfindungsgemäß in je einem getrennt voneinander ausgebildeten Gehäuse angeordnet, so dass eine Verwendung der gleichen Bauteile für unterschiedliche Verwendungszwecke möglich ist, lediglich unter Änderung der Kabellänge und Mantellänge. Das Gehäuse weist mindestens eine Führung für das Kabel auf, welche ein Abrutschen des Kabels von der Scheibe verhindert..

Das Kabel ist erfindungsgemäß außerhalb von den Gehäusen vollständig von einem Mantel umgeben, der zumindest teilweise in die Gehäuse einführbar ist. Dabei stellt der Mantel die Kabelspannung sicher, wofür zusätzliche Federn vorgesehen sind, die ein Spiel ausgleichen und für eine beständige Vorspannung sorgen, so dass eine Betätigung der Betätigungsvorrichtung sofort zu einer Betätigung des Stellorgans führt.

De beiden Enden der Übertragungsvorrichtung sind bevorzugt einander entsprechend ausgebildet, so dass sich die Montage vereinfacht und die Anzahl der Teile verringert werden kann. Alternativ kann jedoch eine unterschiedliche Ausgestaltung vorgesehen sein, insbesondere wenn eine Übersetzung erforderlich ist. In diesem Fall können Scheiben mit unterschiedlichen Durchmessern verwendet werden.

Im Folgenden wird die Erfindung anhand eines Ausführungsbeispiels unter Bezugnahme auf die Zeichnung im Einzelnen erläutert. Es zeigen:

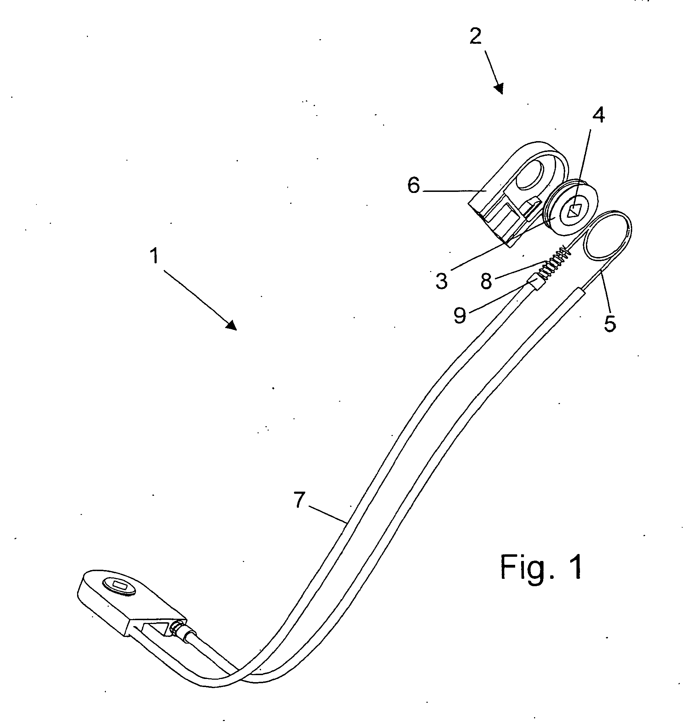

- Fig. 1: eine Übertragungsvorrichtung gemäß dem Ausführungsbeispiel, auf einer Seite im zusammengebauten Zustand und auf der anderen Seite in einer Explosionsdarstellung, und
- Fig. 2: eine ausschnittsweise und vergrößerte Darstellung von Fig. 1.

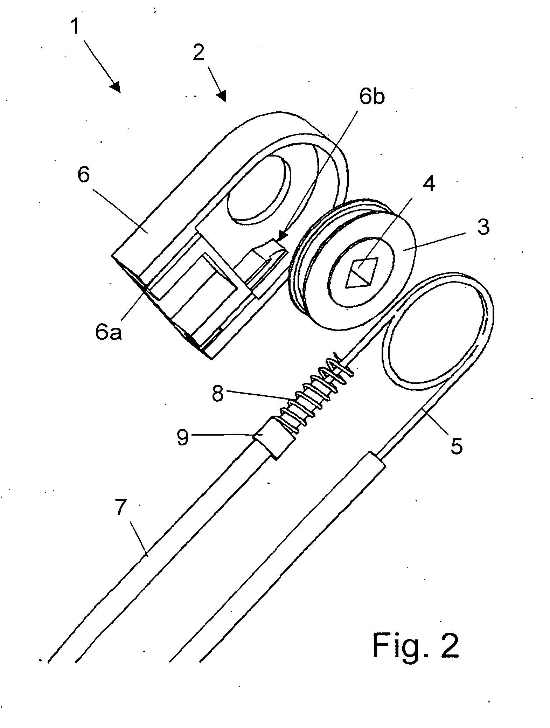

Eine Übertragungsvorrichtung 1 zur Übertragung einer Drehbewegung von einer Betätigungsvorrichtung zu einem Stellorgan einer Kraftfahrzeug-Klimaanlage, wobei sowohl die Betätigungsvorrichtung als auch das Stellorgan direkt oder indirekt mittels je eines Vierkants mit der Übertragungsvorrichtung 1 verbunden sind, weist zwei gleich ausgebildete Enden 2 mit einer vom entsprechenden Vierkant drehbar gelagerten Kunststoff-Scheibe 3 auf, welche zur Verbindung mit dem Vierkant eine entsprechend ausgebildete Aufnahmeöffnung 4 aufweist. Die Scheibe 3 weist in Verlängerung der Stirnseiten je einen in Umfangsrichtung überstehenden Rand auf. Um jede Scheibe 3 ist ein endloses Stahl-Kabel 5 eineinhalbmal geschlungen. Zum Schutz und zur Führung der Übertragungsvorrichtung weist diese an jedem ihrer Enden 2 ein Gehäuse 6 auf, welches die entsprechende Scheibe 3 und den um die Scheibe 3 gewickelten Teil des Kabels 5 in sich aufnimmt. Jedes Gehäuse 6 weist zwei Schlitze 6a zur Einführung des Kabels 5 und beidseitig zwei Führungen 6b mit einer Vertiefung und abgeschrägtem Ende für das Kabel 5 auf (siehe Fig. 2). Die Schlitze 6a können etwas kleiner als der Kabeldurchmesser ausgebildet sein, wobei zum Einbringen des Kabels 5 in das Gehäuse 6 eine elastische Verformung des Gehäuses 6 erfolgt.

Das Stahl-Kabel 5 ist in den Bereichen zwischen den Gehäusen 6 von einem Kunststoff-Mantel 7 umgeben, wobei der Mantel 7 auch teilweise in das Gehäuse 6 ragen kann, jedoch bevorzugt nicht auf die Scheibe 3 gewickelt ist.

Das Kabel 5 ist im Mantel 7 frei verschiebbar, wobei die Reibung möglichst gering gehalten ist. Zur Vermeidung eines Spiels ist jeweils auf einer Seite eines Mantels 7 eine Feder 8 angebracht, wobei das mantelseitige Ende der Feder 8 an einem am Mantel 7 vorgesehenen Anschlag 9 anliegt oder befestigt ist. Das andere Ende der Feder 8 ragt zum Gehäuse 6 hin und liegt an demselben an, wobei die Feder 8 unter einer gewissen Vorspannung steht, so dass sichergestellt ist, dass das im Mantel 7 angeordnete Kabel 5 gespannt ist und bei einer Betätigung der Betätigungsvorrichtung kein Spiel auftritt.

Wird bei einer Betätigung der Betätigungsvorrichtung die entsprechende Scheibe 3 gedreht, so erfolgt ein bereichsweises Auf- und Abwickeln des Kabels 5 auf bzw. von der Scheibe 3. Das Kabel 5 wird im Mantel 7 verschoben und überträgt die Bewegung auf die stellorganseitige Scheibe 3, welche um einen entsprechenden Winkel gedreht wird. Ein Verschieben der Mäntel 7 mit dem Kabel 5 wird durch die Anlage derselben am Gehäuse 6 und die Federvorspannung am anderen Gehäuse 6 jeweils verhindert.

### Bezugszeichenliste

- 1: Übertragungsvorrichtung
- 2: Ende
- 3: Scheibe
- 4: Aufnahmeöffnung
- 5: Kabel
- 6: Gehäuse
- 6a: Schlitz
- 6b: Führung
- 7: Mantel
- 8: Feder
- 9: Anschlag

## Patentansprüche

1. Übertragungsvorrichtung zur Übertragung einer Drehbewegung von einer Betätigungsvorrichtung zu einem Stellorgan, insbesondere einer Kraftfahrzeug-Klimaanlage, mit einem in einem Mantel (7) angeordneten Kabel (5), wobei das Kabel (5) als endloses Kabel (5) ausgebildet ist und es um eine betätigungsseitig angeordnete Scheibe (3) und um eine stellorganseitige Scheibe (3) geführt ist, wobei beiden Enden (2) der Übertragungsvorrichtung (1) einander entsprechend ausgebildet sind, **dadurch gekennzeichnet, dass**
die Scheiben (3) in je einem Gehäuse (6) angeordnet sind, das Gehäuse (6) mindestens eine Führung (6b) für das Kabel (5) aufweist, wobei das Kabel (5) außerhalb von Gehäusen (6) vollständig von einem Mantel (7) umgeben ist und eine Feder (8) zwischen Mantel (7) und Gehäuse (6) vorgesehen ist, wobei genau eine Feder (8) an genau einem Mantelendbereich jedes der beiden Mäntel (7) vorgesehen ist, wobei die Federn (8) auf unterschiedlichen Seiten der Übertragungsvorrichtung (1) angeordnet sind.

2. Übertragungsvorrichtung nach Anspruch 1, **dadurch gekennzeichnet, dass** das Kabel (5) mindestens eineinhalbmal um jede Scheibe (3) gewickelt ist.

3. Übertragungsvorrichtung nach einem der vorhergehenden Ansprüche, **dadurch gekennzeichnet, dass** das Kabel (5) ein Stahl-Kabel ist.

4. Übertragungsvorrichtung nach einem der vorhergehenden Ansprüche, **dadurch gekennzeichnet, dass** die Scheibe (3) eine Kunststoff-Scheibe ist.

5. Übertragungsvorrichtung nach einem der vorhergehenden Ansprüche, **dadurch gekennzeichnet, dass** der Mantel (7) ein elastischer Kunststoff-Mantel ist.

6. Übertragungsvorrichtung nach einem der vorhergehenden Ansprüche, **dadurch gekennzeichnet, dass** auf dem Mantel (7) ein Anschlag (9) für die Feder (8) vorgesehen ist, mit dem die Feder (8) beständig in Kontakt ist.

7. Heizungs-, Belüftungs- und/oder Klimaanlage mit zumindest einem der folgenden Elemente: Wärmetauscher, Heizkörper, Verdampfer, Gebläse, Luftstromsteuerelement wie Mischklappe oder Klappe, Luftführungskanal, wobei zur Betätigung eines Luftstromsteuerelements eine Übertragungsvorrichtung zwischen dem Luftstromsteuerelement und einer Betätigungseinheit vorgesehen ist gemäß zumindest einem der Ansprüche 1 bis 6.

8. Heizungs-, Belüftungs- und/oder Klimaanlage nach Anspruch 7, **dadurch gekennzeichnet, daß** die Betätigungseinheit eine mechanische Betätigungseinheit, wie beispielsweise ein Drehknopf oder ein Schieberegler ist.

9. Heizungs-, Belüftungs- und/oder Klimaanlage nach Anspruch 7, **dadurch gekennzeichnet, daß** die Betätigungseinheit eine elektrische Betätigungseinheit, wie beispielsweise ein Elektromotor ist.

## Claims

1. Transmission device for transmitting a rotational movement from an actuating device to a control unit, in particular in a motor vehicle air conditioning unit, having a cable (5) positioned in a sheath (7), the cable (5) being designed as an endless cable (5) and being guided around a disc (3) positioned on the actuating side and a disc (3) on the control unit side, the two ends (2) of the transmission device (1) being designed in a corresponding manner,
**characterised in that**
the discs (3) are each positioned in a housing (6), the housing (6) has at least one guide (6b) for the cable (5), the cable (5) being completely surrounded by a sheath (7) outside the housings (6) and a spring (8) being provided between the sheath (7) and the housing (6), exactly one spring (8) being provided on exactly one sheath end region on each of the two sheaths (7), the springs (8) being positioned on different sides of the transmission device (1).

2. Transmission device in accordance with claim 1,
**characterised in that**
the cable (5) is wound at least one and a half times around each disc (3).

3. Transmission device in accordance with one of the preceding claims,
**characterised in that**
the cable (5) is a steel cable.

4. Transmission device in accordance with one of the preceding claims,
**characterised in that**
the disc (3) is a plastic disc.

5. Transmission device in accordance with one of the preceding claims,
**characterised in that**
the sheath (7) is an elastic plastic sheath.

6. Transmission device in accordance with one of the preceding claims,
**characterised in that**
provided on the sheath (7) is a stop (9) for the spring (8) which is permanently in contact with the spring (8).

7. Heating, ventilation and/or air conditioning unit having at least one of the following elements: heat exchanger, heating element, evaporator, fan, air flow control element such as a mixing flap or flap, or air conduit, a transmission device being provided between an air flow control element and an actuating unit for actuating the air flow control element in accordance with at least one of claims 1 to 6.

8. Heating, ventilation and/or air conditioning unit in accordance with claim 7,
**characterised in that**
the actuating unit is a mechanical actuating unit such as a knob or slider, for example.

9. Heating, ventilation and/or air conditioning unit in accordance with claim 7,
**characterised in that**
the actuating unit is an electrical actuating unit such as an electric motor, for example.

## Revendications

1. Dispositif de transmission servant à la transmission d'un mouvement de rotation d'un dispositif d'actionnement, à un organe de commande, en particulier à un système de climatisation d'un véhicule automobile, ledit dispositif de transmission comprenant un câble (5) disposé dans une gaine (7), où le câble (5) est configuré comme un câble sans fin (5), ledit câble étant guidé autour d'un rouleau (3) disposé côté actionnement, et autour d'un rouleau (3) disposé côté organe de commande, où les deux extrémités (2) du dispositif de transmission (1) sont configurées en se correspondant l'une l'autre,
**caractérisé en ce que** les rouleaux (3) sont disposés, chacun, dans un boîtier (6), le boîtier (6) présentant au moins un guidage (6b) pour le câble (5), où le câble (5) est, à l'extérieur de boîtiers (6), entouré complètement par une gaine (7), et il est prévu un ressort (8) entre la gaine (7) et le boîtier (6), où il est prévu, précisément, un ressort (8) sur précisément une zone d'extrémité de chacune des deux gaines (7), où les ressorts (8) sont disposés sur des côtés différents du dispositif de transmission (1).

2. Dispositif de transmission selon la revendication 1, **caractérisé en ce que** le câble (5) est enroulé au moins une fois et demie autour de chaque rouleau (3).

3. Dispositif de transmission selon l'une ou l'autre des revendications précédentes, **caractérisé en ce que** le câble (5) est un câble en acier.

4. Dispositif de transmission selon l'une quelconque des revendications précédentes, **caractérisé en ce que** le rouleau (3) est un rouleau en matière plastique.

5. Dispositif de transmission selon l'une quelconque des revendications précédentes, **caractérisé en ce que** la gaine (7) est une gaine en matière plastique élastique.

6. Dispositif de transmission selon l'une quelconque des revendications précédentes, **caractérisé en ce qu'**il est prévu, sur la gaine (7), une butée (9) pour le ressort (8), butée avec laquelle le ressort (8) est constamment en contact.

7. Dispositif de chauffage, de ventilation et / ou de climatisation comprenant au moins l'un des éléments suivants : un échangeur de chaleur, un radiateur, un évaporateur, un ventilateur, un élément de commande de flux d'air tel qu'un volet mélangeur ou un volet, un conduit de passage d'air où, pour l'actionnement d'un élément de commande de flux d'air, il est prévu un dispositif de transmission entre l'élément de commande de flux d'air et une unité d'actionnement, conformément à au moins l'une quelconque des revendications 1 à 6.

8. Système de chauffage, de ventilation et / ou de climatisation selon la revendication 7, **caractérisé en ce que** l'unité d'actionnement est une unité d'actionnement mécanique, comme par exemple un bouton rotatif ou un dispositif de réglage coulissant.

9. Système de chauffage, de ventilation et / ou de climatisation selon la revendication 7, **caractérisé en ce que** l'unité d'actionnement est une unité d'actionnement électrique comme par exemple un moteur électrique.
